(19) Europäisches Patentamt
European Patent Office
Office européen des brevets

(11) EP 0 963 024 A1

## (12) EUROPÄISCHE PATENTANMELDUNG

(43) Veröffentlichungstag:
08.12.1999 Patentblatt 1999/49

(51) Int. Cl.⁶: $H02H\ 3/33$, $H02H\ 1/04$

(21) Anmeldenummer: 98108823.0

(22) Anmeldetag: 14.05.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(71) Anmelder:
SIEMENS AKTIENGESELLSCHAFT
80333 München (DE)

(72) Erfinder:
Bauer, Bernhard, Dipl.-Ing. (FH)
93053 Regensburg (DE)

### (54) Schutzschaltgeraet

(57) Um ein Schutzschaltgerät, insbesondere ein Differenzstrom-Schutzschalter oder Differenzstrom-Zusatz, mit einstellbarer Zeitverzögerung zu realisieren, das einerseits gegenüber kurzzeitigen Fehlerströmen ein stabiles Nicht-Auslöseverhalten zeigt, und das andererseits sowohl bei sinus-förmigen als auch bei nicht-sinusförmigen Fehlerströmen eine besonders kurze Auslösezeit aufweist, ist eine Verzögerungsschaltung (9) vorgesehen, die zwei in Reihe geschaltete Komparatoren (16,18) mit einem dazwischen geschalteten Zeitverzögerungsmodul (17) umfaßt. Dem ersten Komparator (16) ist dabei ein Glättungsmodul (14) vorgeschaltet.

FIG 2

EP 0 963 024 A1

**Beschreibung**

Die Erfindung bezieht sich auf ein Schutzschaltgerät, insbesondere auf einen Differenzstrom-Schutzschalter oder Differenzstrom-Zusatz, mit einstellbarer Zeitverzögerung.

Ein derartiges Schutzschaltgerät dient zur Sicherstellung des Schutzes gegen einen gefährlichen Körperstrom in einer elektrischen Anlage. Ein solcher tritt beispielsweise dann auf, wenn eine Person ein spannungsführendes Teil einer elektrischen Anlage berührt. Der Fehler- oder Differenzstrom fließt dann über die Person als Körperstrom gegen Erde ab. Der zum Schutz gegen gefährliche Körperströme eingesetzte Schutzschalter trennt bei Überschreiten des sogenannten Bemessungsfehlerstromes sicher und schnell die betroffenen Stromkreise vom Netz.

Der Aufbau eines Schutzschalters ist beispielsweise aus der „etz" (1986), Heft 20, Seiten 938 bis 945, bekannt. Dort sind insbesondere in den Bildern 1 bis 3 Prinzipschaltbilder und Funktionsprinzipien eines Fehlerstrom-Schutzschalters (FI-Schutzschalter) und eines Differenzstrom-Schutzschalters (DI-Schutzschalter) dargestellt.

Der FI- und der DI-Schutzschalter sind in ähnlicher Art und Weise aus drei Baugruppen aufgebaut. In der Sekundärwicklung eines Summenstromwandlers, durch dessen Wandlerkern alle stromführenden Leiter eines Leiternetzes geführt sind, wird im Falle eines Fehlerstroms ein Spannungssignal induziert, das einen über eine Auslösekreiselektronik mit der Sekundärwicklung verbundenen Auslöser ansteuert. Der Auslöser ist seinerseits mit einem Schaltschloß gekoppelt, über das bei Ansprechen des Auslösers die Kontakte eines in der oder jeder Leitung liegenden Leistungsschalters geöffnet werden. Dabei entnimmt der FI-Schutzschalter die zur Auslösung notwendige Energie netzspannungsunabhängig aus dem Fehlerstrom selbst, während beim DI-Schutzschalter die Auslösung netzspannungsabhängig erfolgt. Dazu wird dem vom Leitungsnetz gespeisten DI-Auslösekreis des DI-Schutzschalters oder DI-Zusatzes bei Auftreten eines Fehlerstroms das vom Summenstromwandler abgegebene Signal zugeführt.

Häufig sind derartige DI-Schutzschalter mit einer Auslösezeitverzögerung versehen, welche bei Auftreten eines Fehlerstroms erst nach einer einstellbaren Verzögerungszeit die Ansteuerung des Auslösers freigibt. Auf diese Weise wird verhindert, daß ein kurzzeitiger betrieblich bedingter Fehlerstrom zu einer nicht gewünschten Auslösung des Schutzschalters und damit zur Störung von Betriebsabläufen durch Netzabschaltung führt. Sowohl die Randbedingungen, unter denen eine Auslösung des Schutzschalters erfolgen muß, als auch die Randbedingungen, unter denen ein derartiger Schutzschalter nicht auslösen darf, sind beispielsweise für DI-Zusätze von Leistungsschaltern in der IEC-Norm 947-2 vorgeschrieben. Die Erfüllung der genannten Norm wird einerseits mittels einer Nichtauslöseprüfung getestet. Dabei wird ein sinusförmiger Fehlerstrom der Größe 2xI△n (I△n = Nennfehlerstrom) und der Länge der eingestellten Verzögerungszeit erzeugt. Eine Auslösung des getesteten Schutzschalters darf hierbei nicht erfolgen. Andererseits ist gemäß der IEC 947-2 eine Auslöseprüfung vorgeschrieben, nach der der Schutzschalter bei einem Fehlerstrom definierter Größe innerhalb einer begrenzten Zeit auslösen muß.

Die gleichzeitige Erfüllung beider Prüfungen und die zusätzliche Erfüllung der ebenfalls geforderten Stoßstromprüfung, bei der die Nichtauslösung bei zeitlich sehr kurzen (z.B. 8μsec Anstiegszeit und 20μsec Rückenhalbwertszeit), jedoch in der Amplitude sehr hohen Fehlerströmen (z.B. 250A) gefordert ist, erfordert eine spezielle Lösung, insbesondere dann, wenn bei pulsstrom- oder allstromsensitiven Ausführungen, welche diverse Auslöseanforderungen bei unterschiedlichen Auslösefehlerströmen erfüllen müssen, eine möglichst konstante Zeitverzögerung, unabhängig von der Fehlerstromform, erreicht werden soll.

Der Erfindung liegt daher die Aufgabe zugrunde, für ein DI-Schutzschaltgerät mit einstellbarer Auslösezeitverzögerung eine Verzögerungsschaltung anzugeben, welche eine hohe Stromfestigkeit und eine möglichst konstante, von der Fehlerstromform unabhängige Auslösezeitverzögerung aufweist.

Diese Aufgabe wird erfindungsgemäß gelöst durch die Merkmale des Anspruchs 1. Danach umfaßt die Verzögerungsschaltung ein Glättungsmodul, das eine aus einem Fehlerstrom abgeleitete Eingangsspannung in geglätteter Form an zwei in Reihe geschaltete Komparatoren weiterleitet, denen ein Zeitverzögerungsmodul mit einstellbarer Verzögerungszeit zwischengeordnet ist.

Durch die beiden Komparatoren und das zwischen diese geschaltete Zeitverzögerungsmodul wird erreicht, daß ein auftretender Fehlerstrom nur dann zu einem Auslösen des Schutzschalters führt, wenn die zugehörige Eingangsspannung mindestens während einer der eingestellten Verzögerungszeit entsprechenden Zeitspanne einen vorgegebenen Einschaltpegel übersteigt. Mittels des Glättungsmoduls wird vermieden, daß aufgrund der von der Fehlerstromform abhängigen Signal-Welligkeit die Auslösezeitverzögerung bei Fehlerströmen mit hoher Signalwelligkeit, wie z.B. bei phasenangeschnittenen Fehlerströmen, die Auslösezeitverzögerung durch ständiges Über- und Unterschreiten der Komparator-Schaltschwelle deutlich verlängert wird und somit die Auslösezeitverzögerung je nach Fehlerstromform unterschiedlich wirksam wird.

Vorzugsweise ist dem ersten Komparator ein Stoßstromfilter vorgeschaltet. Dieser verhindert, daß kurzzeitige Stoßströme mit geringer Repetitionsrate bei einer kurzen eingestellten Verzögerungszeit ein unbeabsichtigtes Auslösen des Schutzschalters zur Folge haben.

Das Glättungsmodul ist zweckmäßigerweise als Diode mit nachgeschaltetem Tiefpaß in Form eines R-C-Glieds realisiert, dessen Kondensator über einen mit einem ohm'schen Widerstand versehenen ersten Entladekreis entladen wird. Auf diese Weise sind die Ladezeitkonstante und die Entladezeitkonstante des Tiefpasses unabhängig voneinander vorgebbar. Dies wiederum ermöglicht eine besonders präzise Einstellung eines gewünschten Glättungsgrades. Als besonders vorteilhaft hat sich hierbei erwiesen, die Entladezeitkonstante etwa um einen Faktor zwischen 5 und 15 größer als die Ladezeitkonstante zu wählen.

Um zu verhindern, daß der erste Tiefpaß aufgrund dessen Entladezeit die zur Erfüllung der Nichtauslöseprüfung erforderliche Integrationszeitkonstante des Zeitverzögerungsmoduls unnötig verlängert und damit die Einhaltung hier geforderten Auslösezeitgrenzwerte erschwert oder unmöglich macht, ist dem ersten Entladekreis eine Zenerdiode parallelgeschaltet. Über diese wird die maximal am Kondensator anliegende Spannung begrenzt, wodurch sich dieser wiederum schnell entlädt. Die Durchbruchspannung der Zenerdiode ist günstigerweise nur geringfügig größer als der Einschaltpegel des ersten Komparators. Eine Überladung des Kondensators über den zur Auslösung des Schaltprozesses des ersten Komparators erforderlichen Wert wird hierdurch wirksam vermieden. Somit wird die Zeitspanne, innerhalb derer die Kondensatorspannung nach Unterbrechung des Fehlerstromes die Referenzspannung wieder unterschreitet, verkürzt.

Mittels einer üblichen Beschaltung des ersten Komparators mit zwei ohm'schen Widerständen ist dieser vorteilhafterweise mit einer Schalthysterese ausgestattet. Anstelle einer einzelnen Schwellspannung als Einschaltpegel und als Ausschaltpegel sind bei einer Schalthysterese zwei Schwellspannungen vorgesehen. Dabei erfolgt der Einschaltprozeß des Komparators bei Überschreiten der als Einschaltpegel dienenden höheren Schwellspannung. Erst bei Unterschreiten der als Ausschaltpegel vorgesehenen niedrigeren Schwellspannung erfolgt der Ausschaltvorgang des Komparators. Auf diese Weise wird verhindert, daß die Signalwelligkeit der Eingangsspannung im Bereich des Einschaltpegels zu einem wiederholten Ein- und Ausschalten des Komparators führt. Die Schalthysterese und damit die Differenz zwischen dem Einschalt- und dem Ausschaltpegel ist zweckmäßigerweise auf die Parameter des Glättungsmoduls abgestimmt. Dabei ist die Schalthysterese um so kleiner vorgegeben, je größer der Glättungsgrad ist. Durch Versuche hat sich eine Schalthysterese von ≥ 100mV als besonders vorteilhaft herausgestellt.

Das Zeitverzögerungsmodul ist in einfacher Weise in Form eines zweiten kapazitiven Tiefpasses realisiert. Zur Einstellung der Verzögerungszeit wird dabei die Kapazität variiert. In einer besonders vorteilhaften Ausführung sind zu diesem Zweck eine Anzahl von Kondensatoren unterschiedlicher Kapazität vorgesehen, von denen jeweils einer oder - entsprechend einem Kondensator der Kapazität 0 - keiner als Kapazität in den Tiefpaß geschaltet wird. Auf diese Weise ist die Verzögerungszeit mehrstufig einstellbar.

Der Stoßstromfilter ist bevorzugt in Form eines durch eine Diode entkoppelten dritten Tiefpasses in Form eines R-C-Glieds mit einem zweiten Entladekreis ausgeführt. Dabei beträgt die Entladezeitkonstante günstigerweise mehr als das 50-fache der Ladezeitkonstante. Infolge der vergleichsweise hohen Entladezeit wirkt der Stoßstromfilter nur auf kurze Stromstöße mit einer geringen Repititionsrate. Die dem ersten Entladekreis parallelgeschaltete Zenerdiode wirkt gleichzeitig für den zweiten Entladekreis spannungsbegrenzend.

Die mit der Erfindung erzielten Vorteile bestehen insbesondere darin, daß das Schutzschaltgerät durch eine Verzögerungsschaltung mit zwei in Reihe geschalteten Komparatoren, denen ein Zeitverzögerungsmodul zwischengeordnet ist, und mit einem dem ersten Komparator vorgeschalteten Glättungsmodul gegenüber kurzzeitigen Fehlerströmen ein von der Fehlerstromform unabhängiges Nicht-Auslöseverhalten zeigt.

Infolge einer bevorzugten Zusammenschaltung von drei Tiefpässen mit unterschiedlichem Verhältnis von Lade- und Entladezeitkonstante ist unabhängig von der eingestellten Verzögerungszeit einerseits das Auslösen des Schutzschalters unter Einfluß eines kurzzeitigen Fehlerstoßstromes wirksam verhindert. Andererseits ist bei Auftreten eines permanent anstehenden Fehlerstromes eine nicht unnötig lange Auslösezeit und somit eine vorschriftenkonforme Auslösezeitbegrenzung ermöglicht.

Die Auslösezeitbegrenzung wird sichergestellt durch einen optimiert eingestellten Glättungsgrad des Glättungsmoduls in Verbindung mit einer darauf abgestimmten großen Schalthysterese des ersten Komparators. Hierbei ist die Auslösezeit weitgehend unabhängig von der Form des Fehlerstroms. Insbesondere ergibt sich bei phasenangeschnittenen Fehlerströmen keine wesentlich längere Auslösezeit als bei sinusförmigen Fehlerströmen.

Nachfolgend wird ein Ausführungsbeispiel der Erfindung anhand einer Zeichnung näher erläutert. Dabei zeigen:

FIG 1    schematisch einen DI-Schutzschalter mit einer Verzögerungsschaltung,

FIG 2    in einem Blockschaltbild die Auslösesteuerung gemäß FIG 1,

FIG 3    in einem Spannungs-Zeit-Diagramm die Funktionsweise eines (ersten) Komparators der Auslösesteuerung gemäß FIG 2, und

FIG 4    ein elektronisches Schaltbild der Verzögerungsschaltung gemäß FIG 2.

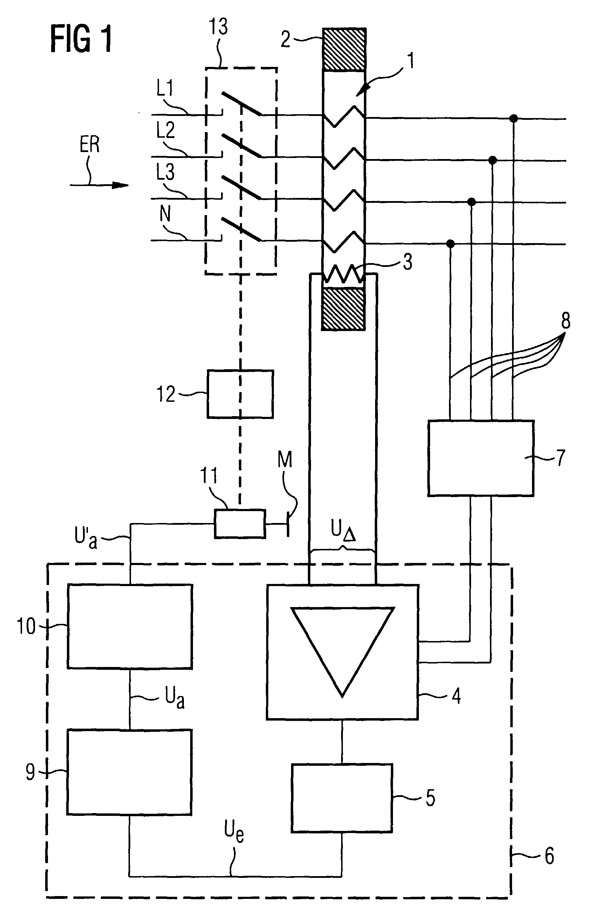

Der in FIG 1 dargestellte DI-Schutzschalter umfaßt einen Summenstromwandler 1 mit einem Wandlerkern 2, durch welchen die drei Phasenleitungen L1,L2,L3 sowie der Nulleiter N eines Vier-Leiternetzes (nachfolgend mit Ln bezeichnet) geführt sind. Der Schutzschalter ist dabei einem (nicht dargestellten) elektrischen Verbraucher vorgeschaltet, welcher entlang der Einspeiserichtung ER aus dem Leiternetz Ln mit Strom versorgt wird.

Der Wandlerkern 2 ist desweiteren mit einer Sekundärspule 3 umwickelt. Im störungsfreien Betrieb des Leiternetzes (L1 bis L3,N) ist die Summe der durch den Wandlerkern 2 fließenden Ströme stets Null. Eine Störung tritt dann auf, wenn - z.B. infolge eines Leckstroms - ein Teil des zugeführten Stromes verbraucherseitig über Erde abgeführt wird. In diesem Fall ergibt die Summe der durch den Wandlerkern 2 fließenden Ströme einen von Null verschiedenen Betrag. Dieser Differenzstrom oder Fehlerstrom induziert in der Sekundärspule 3 des Summenstromwandlers 1 eine Differenzspannung $U_\triangle$, welche als Maß für den aufgetretenen Fehlerstrom herangezogen wird. Die in der Sekundärspule 3 erzeugte Differenzspannung $U_\triangle$ durchläuft dabei zunächst einen Verstärker 4 sowie einen Gleichrichter 5 eines Auslösekreises 6. Zum Betrieb des Verstärkers 4 wird ein DI-Schutzschalter - im Gegensatz zu einem FI-Schutzschalter - über ein Netzgerät 7 mit Strom versorgt. Das Netzgerät 7 ist zu diesem Zweck über eine Versorgungsleitung 8 häufig verbraucherseitig an das Leiternetz Ln angeschlossen.

Die Differenzspannung $U_\triangle$ wird in verstärkter und gleichgerichteter Form als Eingangsspannung $U_e$ einer Verzögerungsschaltung 9 zugeführt. Übersteigt die Eingangsspannung $U_e$ hinsichtlich ihres Betrages und ihrer Dauer einen Schwellwert, so gibt die Verzögerungsschaltung 9 eine Auslösespannung $U_a$ an die Ansteuerschaltung 10 eines Auslösers 11 ab. Der Auslöser 11, der bevorzugt in Form einer Relaisspule realisiert ist, betätigt ein mechanisches Schaltschloß 12, welches die Kontakte eines auf alle Leitungen L1 bis L3,N des Vier-Leiternetzes Ln wirkenden Leistungsschalters 13 öffnet. Die Auslösespannung $U'_a$ der Ansteuerschaltung 10 wird dabei über den Auslöser 11 an Masse M abgeführt.

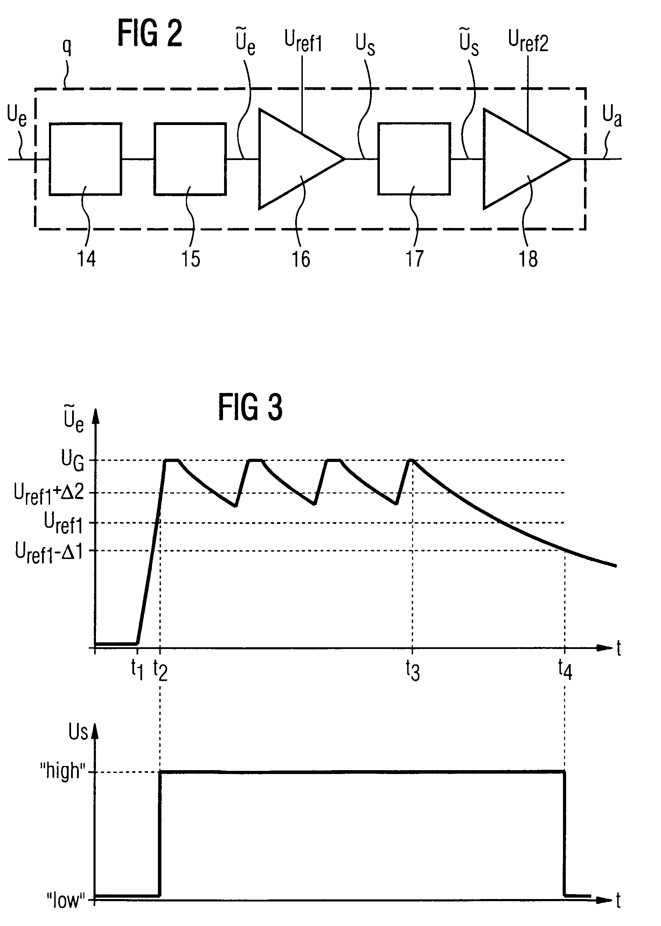

Die Verzögerungsschaltung 9 ist in FIG 2 als Blockschaltbild dargestellt. In der Verzögerungsschaltung 9 durchläuft die als pulsierende Gleichspannung zugelieferte Eingangsspannung $U_e$ zunächst ein Glättungsmodul 14. Dabei wird die Welligkeit, d.h. der Wechselspannungsanteil bezogen auf den Gleichspannungsanteil, der Eingangsspannung $U_e$ vermindert. Dadurch wird eine modifizierte Eingangsspannung $\tilde{U}_e$ mit einem vergleichsweise glatten Zeitverlauf erzeugt.

Einzelne, selten wiederkehrende Stoßströme, wie sie beispielsweise durch eine Gewitterüberspannung erzeugt werden, werden mittels eines dem Glättungsmodul 14 nachgeschalteten Stoßstromfilters 15 unterdrückt. Die geglättete und von Stoßströmen mit geringer Repetitionsrate bereinigte Eingangsspannung $\tilde{U}_e$ wird eingangsseitig einem ersten Komparator 16 zugeführt. Übersteigt die Eingangsspannung $\tilde{U}_e$ eine

dem ersten Komparator 16 durch eine Referenzspannung $U_{ref1}$ vorgegebene Einschaltschwelle, so gibt der erste Komparator 16 eine von Null verschiedene, im folgenden als „high" klassifizierte Signalspannung $U_s$ aus. Über ein Zeitverzögerungsmodul 17 wird eine modifizierte Signalspannung $\tilde{U}_s$ einem zweiten Komparator 18 zugeleitet. Infolge des Zeitverzögerungsmoduls 17 liegt jedoch diese modifizierte Signalspannung $\tilde{U}_s$ nicht unmittelbar mit ihrem Maximalbetrag „high" am Eingang des zweiten Komparators 18 an. Stattdessen bewirkt das Zeitverzögerungsmodul 17 ein allmähliches Ansteigen der Signalspannung $\tilde{U}_s$, so daß erst nach einer vorgegebenen Verzögerungszeit eine als Einschaltpegel des zweiten Komparators vorgegebene Referenzspannung $U_{ref2}$ erreicht wird. Der Einschaltpegel $U_{ref2}$ des zweiten Komparators 18 wird somit nur dann überschritten, wenn während der gesamten Zeitspanne der Verzögerungszeit der Einschaltpegel $U_{ref1}$ des ersten Komparators 16 durch die Eingangsspannung $\tilde{U}_e$ überschritten war. Bei Überschreiten des Einschaltpegels $U_{ref2}$ des zweiten Komparators 18 gibt dieser eine Ausgangsspannung $U_a$ der Größe „high" an die Ansteuerschaltung 10 ab.

Wird dagegen innerhalb der Verzögerungszeit der Ausschaltpegel des ersten Komparators 16 unterschritten, schaltet dieser die Signalspannung $U_s$ auf den vergleichsweise geringen Betrag „low" zurück. Dies führt zu einem durch das Zeitverzögerungsmodul 17 verlangsamten Absinken der Signalspannung $\tilde{U}_s$ am Eingang des zweiten Komparators 18. Der mit der Auslösung des Schutzschalters verbundene Schaltprozeß des zweiten Komparators 18 unterbleibt dadurch.

Um einen stabilen Schaltprozeß zu gewährleisten, weist der erste Komparator 16 eine Schalthysterese $\triangle$ auf. Die Funktionsweise eines derartigen Komparators mit Schalthysterese innerhalb der Verzögerungsschaltung 9 ist in FIG 3 skizziert. Anders als bei einem Komparator ohne Schalthysterese, bei dem der Einschaltpegel und der Ausschaltpegel den gleichen Betrag haben, ist der Ausschaltpegel $U_{ref1} - \triangle1$ des ersten Komparators 16 gegenüber dessen Referenzspannung $U_{ref1}$ um die Spannung $\triangle1$ erniedrigt. Überschreitet zum Zeitpunkt 2, bedingt durch einen zum Zeitpunkt 1 einsetzenden Fehlerstrom, die ansteigende Eingangsspannung $\tilde{U}_e$ den Einschaltpegel $U_{ref1} + \triangle2$ erstmalig, so schaltet der Komparator 16 die Ausgangsspannung $U_s$ von „low" auf „high". Die Anstiegsgeschwindigkeit von $\tilde{U}_e$ ist abhängig von der Ladezeitkonstante des Glättungsmodules 14 und des Stoßstromfilters 15. Ein weiteres Unter- oder Überschreiten des Einschaltpegels $U_{ref1} + \triangle2$ durch die Welligkeit der Eingangsspannung $\tilde{U}_e$ führt nicht zu weiteren Schaltprozessen. $\tilde{U}_e$ wird durch eine im Glättungsmodul enthaltene Spannungsbegrenzung auf eine Grenzspannung $U_G$ begrenzt. Reißt zum Zeitpunkt $t_3$ der Fehlerstrom ab, sinkt $\tilde{U}_e$ wieder ab. Die Zeit bis zum Erreichen der des Ausschaltpegels $U_{ref1} - \triangle1$ wird bestimmt von der Entladekonstante des Glättungsmodules 14 und ggf., wenn $\tilde{U}_e$ entsprechend groß ist, von der Höhe der Begrenzungsspannung $U_G$. Ein Zurückschalten der Signalspannung $U_s$ von „high" auf „low" erfolgt erst dann, wenn die Eingangsspannung $\tilde{U}_e$ den Ausschaltpegel $U_{ref1} - \triangle 1$ zum Zeitpunkt $t_4$ unterschreitet.

Durch FIG 3 wird deutlich, daß die für die Nichtauslöseprüfung erforderliche Integrationszeitkonstante im Zeitverzögerungsmodul 17 nicht nur von der vorgeschriebenen Dauer des Nichtauslösefehlerstroms, sondern auch von der Entladezeitkonstante des Glättungsmoduls 14 und von der Höhe der Grenzspannung $U_G$ abhängig ist. Je niedriger die Entladezeitkonstante und die Grenzspannung $U_G$ sind desto niedriger ist die für die Nichtauslöseprüfung erforderliche Integrationszeitkonstante im Zeitverzögerungsmodul 17. Dies begünstigt die Einhaltung der Auslösezeitgrenzwerte bei der ebenfalls geforderten Auslöseprüfung.

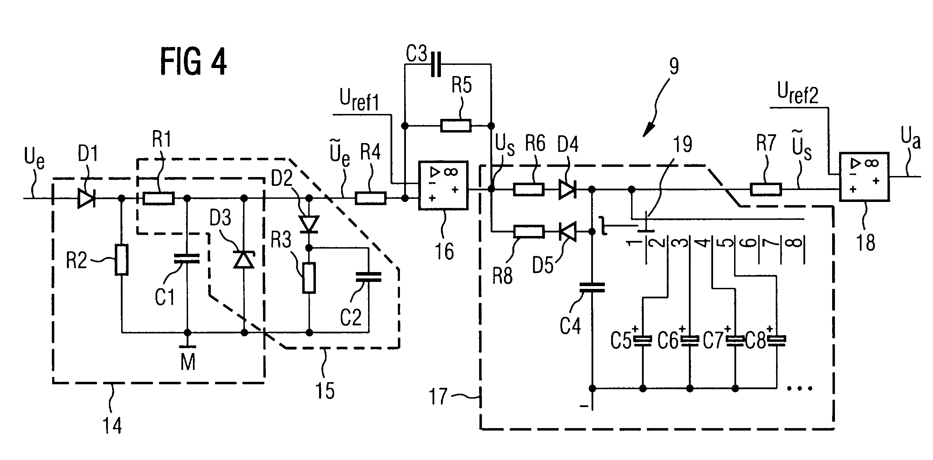

FIG 4 zeigt eine bevorzugte Ausführungsform der Verzögerungsschaltung 9 in einem elektronischen Schaltbild. Das Glättungsmodul 14 ist danach in Form einer Diode D1 mit einem nachgeschalteten ersten Tiefpasses R1,C1 ausgeführt. Dessen Kondensator C1 wird durch die angelegte Eingangsspannung $U_e$ über einen Ladewiderstand R1 geladen. Beim Absinken der Eingangsspannung $U_e$ erfolgt die Entladung von C1 über die Widerstände R1+R2. Die am Kondensator C1 anliegende Spannung $\tilde{U}_e$ ist über einen Widerstand R4 auf den Eingang des ersten Komparators 16 gelegt. Durch den Widerstand R4 und einen den Eingang des Komparators 16 mit dessen Ausgang verbindenden Widerstand R5 ist der Komparator 16 schaltungstechnisch mit einer Schalthysterese $\triangle=\triangle 1+\triangle 2$ versehen. Dem Widerstand R5 ist dabei zur Erhöhung der Störfestigkeit ein Kondensator C3 parallelgeschaltet. Am Referenzeingang des ersten Komparators 16 liegt die vorgegebene Referenzspannung $U_{ref1}$ an.

Überschreitet die Spannung $\tilde{U}_e$ den Einschaltpegel $U_{ref1}+\triangle 2$ des ersten Komparators 16, so wechselt dessen Ausgangsspannung $\tilde{U}_s$ von „low" auf „high". Diese wird dem in Form eines zweiten Tiefpasses R6,Cx realisierten Zeitverzögerungsmodul 17 zugeführt. Cx steht in diesem Zusammenhang für eine Anzahl von Kondensatoren C5,C6,C7,C8 die alternativ als Kapazität für den zweiten Tiefpaß R6,Cx mittels eines Schalters 19 zuschaltbar sind. Cx bezeichnet weiterhin die Möglichkeit, daß keiner der Kondensatoren C5,C6,C7,C8 zugeschaltet ist. Diese in FIG 4 dargestellte Schalterstellung entspricht formal dem Anschluß eines Kondensators der Kapazität Null. Entsprechend arbeitet in diesem Fall die Verzögerungsschaltung 9 ohne Verzögerungszeit. Den Kondensatoren C5,C6,C7,C8 ist aus Gründen der elektro-magnetischen Verträglichkeit (EMV) ein Kondensator C4 mit im Vergleich zu den vorgenannten Kondensatoren vernachlässigbarer Kapazität parallelgeschaltet. Der Widerstand R6 dient als Ladewiderstand von Cx. Ein dem Widerstand R6 parallelgeschalteter Widerstand R8 dient desweiteren als Entladewiderstand. Über die Dioden D4 und D5 sind die Widerstände R6 und R8 entkoppelt. Die getrennte Ausführung von Lade- und Entladewiderstand R6 bzw. R8 ermöglicht es, die Einstellung der Rücksetzzeit des Zeitverzögerungsmodules 17 in den Ausgangszustand (Cx ungeladen) nach der Unterbrechung des Fehlerstromes unabhängig von allen anderen Forderungen einzustellen.

Ist einer der Kondensatoren C5,C6,C7,C8 zugeschaltet, so wird infolge des Einschaltvorgangs des ersten Komparators 16 über einen Widerstand R6 und die Diode D4 zunächst der zugeschaltete Kondensator Cx geladen. Die infolge dieses Ladevorgangs am zugeschalteten Kondensator Cx steigende Spannung liegt über einen Widerstand R7 am Eingang des zweiten Komparators 18 an. Übersteigt diese Spannung den Einschaltpegel des zweiten Komparators 18, so wechselt der zweite Komparator 18 die Ausgangsspannung $U_a$ von „low" auf „high". Der Einschaltpegel des zweiten Komparators 18 ist abhängig von der an seinem Eingang anliegenden Referenzspannung $U_{ref2}$. Dieses Einschalten der Ausgangsspannung $U_a$ führt dann zur Betätigung des Auslösers 8.

Die Ladezeitkonstante R1 x C1 des ersten Tiefpasses R1,C1 ist auf R1 x C1 $\leq$ 10msec begrenzt, um eine kurze Auslösezeit - insbesondere bei unverzögerter Einstellung oder sehr kurzer Zeitverzögerungseinstellung - zu erreichen. Je hochohmiger der Entladewiderstand (R2+R1) des ersten Tiefpasses R1,C1 ausgeführt ist, desto geringer ist die Welligkeit der Spannung am Eingang des ersten Komparators 16. Gleichzeitig vergrößert jedoch ein zu großer Entladewiderstand (R1+R2) die Auslösezeit des Schutzschaltgerätes u.U. unzulässig. Ist nämlich der Kondensator C1 infolge eines zeitlich begrenzten Fehlerstromes aufgeladen, so sinkt die Spannung $\tilde{U}_e$ nur langsam mit der Entladezeitkonstante (R1+R2) x C1, ab. Dauert der Abfall von $\tilde{U}_e$ nach dem Abreißen des Fehlerstromes bis zum Erreichen der Ausschaltschwelle des Komparators zu lange, sind die sich entgegenstehenden Forderungen der Auslöse- und Nichtauslöseprüfung nicht mehr realisierbar. Dies gilt insbesondere dann, wenn eine geringe Zeitverzögerung eingestellt ist. Aus diesem Grund beträgt der Entladewiderstand (R1+R2) lediglich das 5- bis 15-fache des Ladewiderstands R1. Entsprechend gilt für die Zeitkonstanten, die sich aus dem Produkt der Kapazität C1 und dem entsprechenden Widerstand ergeben, die Beziehung $5 \leq [(R1+R2) \times C1][R1 \times C1] \leq 15$. Eine verbleibende Welligkeit der Eingangsspannung $\tilde{U}_e$ ist dabei unbedenklich. Ein durch diese Welligkeit verursachtes wiederholtes Ein- und Ausschalten des ersten Komparators 16 wird durch eine ausreichend große, auf das Glättungsmodul abgestimmte Hysterese $\triangle \geq$ 100 mV vermieden. Die Hysterese $\triangle$ wird in bekannter Weise durch entsprechende Dimensionierung der Widerstände R4 und R5 eingestellt.

Als weiteres Mittel zur Verkürzung der Entladezeit des Kondensators C1 ist diesem eine Zenerdiode D3 parallelgeschaltet. Diese begrenzt die maximal am Kondensator C1 anliegende Spannung auf einen Wert $U_G$, der unmittelbar oberhalb des Einschaltpegels $U_{ref1}+\triangle1$ ersten Komparators 16 liegt.

Der zur Dämpfung von Stoßströmen mit geringer Repititionsrate vorgesehene Stoßstromfilter 15 ist in Form eines dritten Tiefpasses R1,C2 ausgeführt. Dessen Kodensator C2 wird dabei über den Ladewiderstand R1 und die Diode D2 geladen. Die Entladezeitkonstante R3 x C2 beträgt dabei etwa das 50-fache der Ladezeitkonstante R1 x C2. Infolge der vergleichsweise hohen Entladezeitkonstante R3 x C2 wirkt der Stoßstromfilter 15 nur bei selten wiederkehrenden kurzzeitigen Ableitströmen.

## Patentansprüche

1. Schutzschaltgerät mit einstellbarer Zeitverzögerung, insbesondere Differenzstromschutzschalter, mit einer Verzögerungsschaltung (9), die ein Glättungsmodul (14) zur Glättung einer einen Fehlerstrom anzeigenden Eingangsspannung ($U_e$) und einen dem Glättungsmodul (14) nachgeschalteten ersten Komparator (16) zur Ausgabe einer internen Signalspannung ($U_s$) sowie einen zweiten Komparator (18) zur Ausgabe einer gegenüber der Signalspannung ($U_3$) zeitverzögerten Auslösespannung ($U_a$) umfaßt, wobei zwischen die Komparatoren (16,18) ein Zeitverzögerungsmodul (17) mit einstellbarer Verzögerungszeit geschaltet ist.

2. Schutzschaltgerät nach Anspruch 1, **gekennzeichnet durch** einen dem ersten Komparator (16) vorgeschalteten Stoßstromfilter (15).

3. Schutzschaltgerät nach Anspruch 1 oder 2, **dadurch gekennzeichnet**, daß das Glättungsmodul (11) einen ersten Tiefpaß (R1,C1) mit einem ersten Entladekreis (R1,R2,C1) umfaßt.

4. Schutzschaltgerät nach Anspruch 3, **dadurch gekennzeichnet**, daß dem ersten Entladekreis (R1,R2,C1) eine Zenerdiode (D3) als Spannungsbegrenzer parallelgeschaltet ist.

5. Schutzschaltgerät nach Anspruch 4, **dadurch gekennzeichnet**, daß die Durchbruchspannung der Zenerdiode (D3) etwa dem Einschaltpegel ($U_{ref1}+\triangle2$) des ersten Komparators (16) entspricht.

6. Schutzschaltgerät nach einem der Ansprüche 3 bis 5, **dadurch gekennzeichnet**, daß die Ladezeitkonstante (R1 x C1) und die Entladezeitkonstante ([R1+R2] x C2) des ersten Tiefpasses (R1,C1) zueinander in einem Verhältnis $5 \leq [(R1+R2) \times C1]/[R1 \times C1] \leq 15$ stehen.

7. Schutzschaltgerät nach einem der Ansprüche 1 bis 6, **dadurch gekennzeichnet**, daß der erste Komparator (16) eine Schalthysterese $\triangle \geq 100mV$ aufweist.

8. Schutzschaltgerät nach einem der Ansprüche 1 bis 7, **dadurch gekennzeichnet**, daß das Zeitverzögerungsmodul (17) einen zweiten Tiefpaß (R6,Cx) mit einstellbarer Kapazität (Cx) umfaßt.

9. Schutzschaltgerät nach Anspruch 8, **dadurch gekennzeichnet**, daß zur Einstellung der Kapazität (Cx) eine Anzahl von Kondensatoren (C5,C6,C7,C8) unterschiedlicher Kapazität alternativ dem zweiten Tiefpaß (R6,Cx) zuschaltbar ist.

10. Schutzschaltgerät nach einem der Ansprüche 2 bis 9, **dadurch gekennzeichnet**, daß der Stoßstromfilter (15) einen durch eine Diode (D2) entkoppelten dritten Tiefpaß (R1,C2) mit einem zweiten Entladekreis (R3,C2) umfaßt.

11. Schutzschaltgerät nach Anspruch 10, **dadurch gekennzeichnet**, daß die Entladezeitkonstante (R3 x C2) und die Ladezeitkonstante (R1 x C2) des dritten Tiefpasses (R1,C2) zueinander in einem Verhältnis (R3 x C2)/(R1 x C2) $\geq 50$ stehen.

12. Schutzschaltgerät nach einem der Ansprüche 2 bis 11, **dadurch gekennzeichnet**, daß dem zweiten Entladekreis (R3) eine Zenerdiode (D3) als Spannungsbegrenzer parallelgeschaltet ist.

13. Schutzschaltgerät nach einem der Ansprüche 1 bis 12, **dadurch gekennzeichnet**, daß die Entladezeitkonstante des Zeitverzögerungsmodules (17) (R8 x Cx) mittels eines Entladewiderstands (R8) unabhängig von dessen Ladezeitkonstante (R6 x Cx) einstellbar ist.

## FIG 1

FIG 2

FIG 3

FIG 4

EP 0 963 024 A1

**Europäisches Patentamt**

# EUROPÄISCHER RECHERCHENBERICHT

Nummer der Anmeldung

EP 98 10 8823

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | PATENT ABSTRACTS OF JAPAN<br>vol. 018, no. 434 (E-1592),<br>12. August 1994<br>& JP 06 133448 A (MATSUSHITA ELECTRIC<br>WORKS LTD), 13. Mai 1994 | 1 | H02H3/33<br>H02H1/04 |
| Y | * Zusammenfassung *<br>--- | 2-5,8 | |
| Y | WO 96 29770 A (SIEMENS AG)<br>26. September 1996<br>* Zusammenfassung *<br>--- | 2-5,8 | |
| A | GB 2 258 095 A (BRENNAN PAUL VICTOR)<br>27. Januar 1993<br>* Zusammenfassung *<br>----- | 1 | |

**RECHERCHIERTE SACHGEBIETE (Int.Cl.6)**

H02H

Der vorliegende Recherchenbericht wurde für alle Patentansprüche erstellt

| Recherchenort | Abschlußdatum der Recherche | Prüfer |
|---|---|---|
| DEN HAAG | 14. Oktober 1998 | Salm, R |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03 82 (P04C03)

EP 0 963 024 A1

## ANHANG ZUM EUROPÄISCHEN RECHERCHENBERICHT
## ÜBER DIE EUROPÄISCHE PATENTANMELDUNG NR.

EP 98 10 8823

In diesem Anhang sind die Mitglieder der Patentfamilien der im obengenannten europäischen Recherchenbericht angeführten Patentdokumente angegeben
Die Angaben über die Familienmitglieder entsprechen dem Stand der Datei des Europäischen Patentamts am
Diese Angaben dienen nur zur Unterrichtung und erfolgen ohne Gewähr.

14-10-1998

| Im Recherchenbericht angeführtes Patentdokument | Datum der Veröffentlichung | Mitglied(er) der Patentfamilie | Datum der Veröffentlichung |
|---|---|---|---|
| WO 9629770 A | 26-09-1996 | EP 0815629 A | 07-01-1998 |
| GB 2258095 A | 27-01-1993 | KEINE | |

EPO FORM P0461

Für nähere Einzelheiten zu diesem Anhang . siehe Amtsblatt des Europäischen Patentamts. Nr 12/82

11